# FASCICULE DE BREVET EUROPEEN

(11) **EP 3 489 930 B1**
(45) Date de publication et mention de la délivrance du brevet: **14.02.2024**
(21) Numéro de dépôt: 18208024.2
(22) Date de dépôt: 23.11.2018
(51) Int. Cl.: G08G 5/00, G01C 21/34

(54) **SYSTÈME DE CALCUL DE MISSION D'UN AÉRONEF, COMPORTANT UN MOTEUR DE CALCUL DE TRAJECTOIRE DE L'AÉRONEF LORS DE LA MISSION ET PROCÉDÉ ASSOCIÉ**
BERECHNUNGSSYSTEM DER MISSION EINES LUFTFAHRZEUGS, DAS EINEN MOTOR ZUR BERECHNUNG DER FLUGBAHN DES LUFTFAHRZEUGS BEI SEINER MISSION UMFASST, UND ENTSPRECHENDES VERFAHREN
MISSION COMPUTING SYSTEM FOR AN AIRCRAFT, COMPRISING A COMPUTATION ENGINE FOR THE AIRCRAFT PATH DURING THE MISSION AND ASSOCIATED METHOD

(30) Priorité: 24.11.2017 FR 1701235
(43) Date de publication de la demande: 29.05.2019
(73) Titulaire: Dassault Aviation, 75008 Paris (FR)
(72) Inventeur: GRIMALD, Cyrille, 92100 BOULOGNE (FR)
(74) Mandataire: Lavoix

(56) Documents cités:
- FR-A1- 2 894 367
- US-A1- 2013 046 422
- US-A1- 2016 093 222
- US-A1- 2016 225 265
- US-A1- 2017 227 955

## Description

La présente invention concerne un système de calcul de mission d'un aéronef, comportant un moteur de calcul de trajectoires de l'aéronef lors de la mission, selon le préambule de la revendication 1.

US2013046422 décrit un système du type précité. US2016225265A1 divulgue une méthode d'aide à la navigation pour déterminer la trajectoire de vol d'un aéronef entre un point de départ un le point d'arrivée basée sur la détermination d'iso-coûts.

Un tel système de calcul est notamment destiné à être intégré dans un cockpit, en parallèle d'un système de conduite de vol (« Flight Management System » ou « FMS » en anglais), pour permettre à l'équipage de déterminer des trajectoires de mission.

En variante, le système de calcul est propre à être intégré dans un système de planification de mission non embarqué, par exemple dans une infrastructure aéroportuaire d'établissement de trajectoire d'aéronef, et/ou dans un bagage de vol électronique (« Electronic Flight Bag » ou « EFB »), éventuellement constitué d'un dispositif électronique portable.

La préparation et la définition d'une mission d'aéronef entre un premier point géographique et un deuxième point géographique est une tâche consommatrice en temps. Elle nécessite notamment de déterminer la route que va suivre l'aéronef, le profil de vol associé, et le chargement en passagers, en fret et en carburant. Cette définition est effectuée en fonction d'un contexte de mission incluant la météorologie, les routes aériennes à emprunter, et d'un contexte avion qui inclut la configuration et le type d'aéronef utilisé, ainsi que son état de fonctionnement.

Dans l'aviation civile classique, la mission est relativement définie, puisqu'elle consiste généralement à emmener des passagers d'un premier point géographique à un deuxième point géographique à un horaire donné en utilisant des routes de navigation commerciales connues et répétitives.

Généralement, les compagnies aériennes ou/et des fournisseurs externes disposent de systèmes de calcul permettant de fournir un plan de vol et des performances aéronef attendues, par exemple une quantité de carburant requise.

Même si des changements peuvent intervenir dans le plan de vol, ceux-ci sont généralement minimes et consistent souvent en un décalage de l'horaire pour tenir compte par exemple d'un changement de créneau ou de difficultés météorologiques.

Dans l'aviation d'affaires, les contraintes pesant sur l'équipage sont supérieures. Les clients demandent parfois à l'équipage de respecter des critères de mission plus stricts, par exemple en matière de confort du passager pendant le vol, de possibilité de se connecter à des systèmes de transmission par satellite, de charge disponible, etc.

De plus, les conditions de mission, notamment les horaires, sont très variables, et les étapes de la mission peuvent changer rapidement en fonction des besoins propres des passagers.

Dans ce cadre, les systèmes de fournitures de plans de vol existants ne donnent pas entière satisfaction.

En particulier, ces systèmes sont conçus pour fonctionner sur une somme de critères d'entrée (vitesse, niveau de vol, nombre de passagers,...) auquel correspondra une seule solution de navigation. Il est donc fréquemment nécessaire d'effectuer plusieurs itérations pour ajuster les hypothèses de mission.

De plus, ces systèmes fonctionnent en suivant des routes aériennes déjà établies, qui résultent de la radionavigation. Ces systèmes sont basés sur l'identification d'une route aérienne (trace sol, c'est-à-dire la trajectoire de l'avion en projection sur le sol), puis sur une optimisation verticale de la trajectoire tenant compte uniquement des performances de l'avion (héritage de la radionavigation). La route n'est donc pas elle-même optimisée en fonction du contexte mission (contrainte, critères, météo,...)

Dans l'aviation civile, du personnel au sol est souvent prévu pour alléger la charge de l'équipage et effectuer au moins partiellement le travail de préparation.

Par contre, dans l'aviation d'affaires, l'équipage doit souvent lui-même préparer la mission, en tenant compte des contraintes particulières des passagers, et des changements pouvant intervenir à tout moment dans la mission.

Un but de l'invention est donc de fournir un système de calcul de mission d'aéronef qui permette à l'équipage de trouver facilement une trajectoire optimale en fonction de la route souhaitée, de la météorologie, des contraintes client et des performances de l'aéronef.

À cet effet, l'invention a pour objet un système selon la revendication 1.

Le système selon l'invention peut comprendre l'une ou plusieurs des caractéristiques des revendications 2 à 7, prise(s) isolément ou suivant toute combinaison techniquement possible.

L'invention a également pour objet un procédé de calcul d'une trajectoire d'aéronef selon la revendication 8.

Le procédé selon l'invention peut comprendre l'une ou plusieurs des caractéristiques des revendications 9 à 11, prise(s) isolément ou suivant toute combinaison techniquement possible.

L'invention sera mieux comprise à la lecture de la description qui va suivre, donnée uniquement à titre d'exemple, et faite en se référant aux dessins annexés, sur lesquels :
- la figure 1 est un schéma synoptique illustrant un premier système de calcul de mission selon l'invention, intégré dans un cockpit d'un aéronef ;
- la figure 2 est une vue schématique d'une zone de navigation de l'aéronef dans laquelle se trouvent des régions de turbulences, des régions ne répondant pas aux critères de confort de mission et des régions de couverture de télécommunication par satellite ;
- la figure 3 est une vue schématique illustrant le principe de calcul de courbes isochrones à partir d'un point donné dans la zone de navigation de l'aéronef ;
- la figure 4 est une vue schématique de dessus illustrant la mise en oeuvre d'un procédé de calcul de trajectoire à l'aide du moteur de calcul du système de calcul de mission selon l'invention ; et
- la figure 5 est une vue schématique illustrant un deuxième système de calcul de mission selon l'invention, intégré dans un bagage de vol électronique.

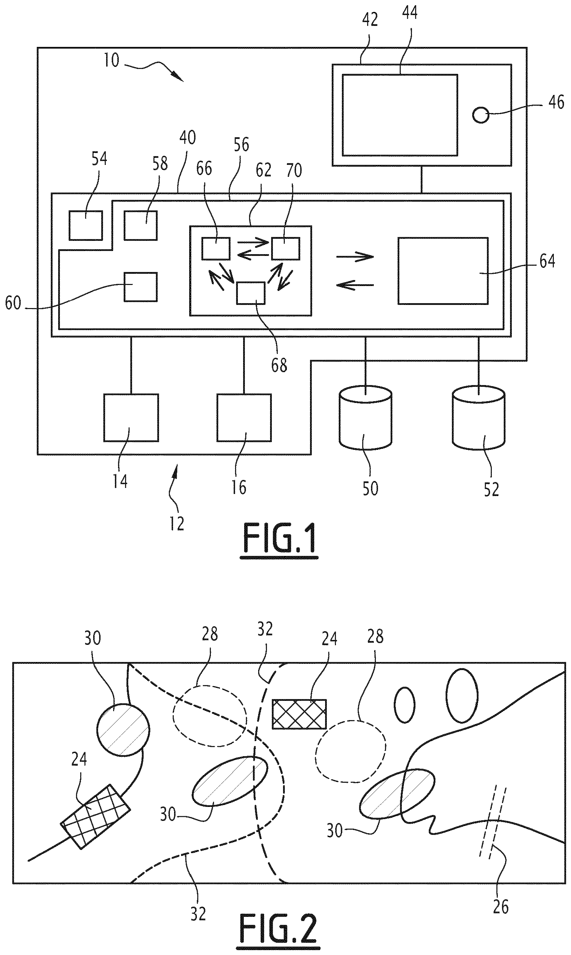

Un premier système 10 de calcul de mission selon l'invention, présent dans le cockpit 12 d'un aéronef est illustré par la figure 1.

L'aéronef est de préférence un aéronef civil, notamment un avion d'affaires.

D'une manière connue, le cockpit 12 de l'aéronef est destiné à commander l'ensemble des systèmes de l'aéronef lors de son utilisation.

Le cockpit 12 comporte notamment, outre le système 10 de calcul de mission, un système 14 de conduite de vol du cockpit de l'aéronef (« Flight Management System » en anglais ou « FMS »), et un système 16 de gestion et de suivi des différents systèmes avion.

Le système de conduite de vol 14 est destiné à assister le pilote de l'aéronef pour mener la navigation de l'aéronef lors d'une mission. Il est propre à fournir des informations notamment sur la route suivie par l'aéronef, et sur des paramètres d'évolution de l'aéronef tels que la consommation en carburant.

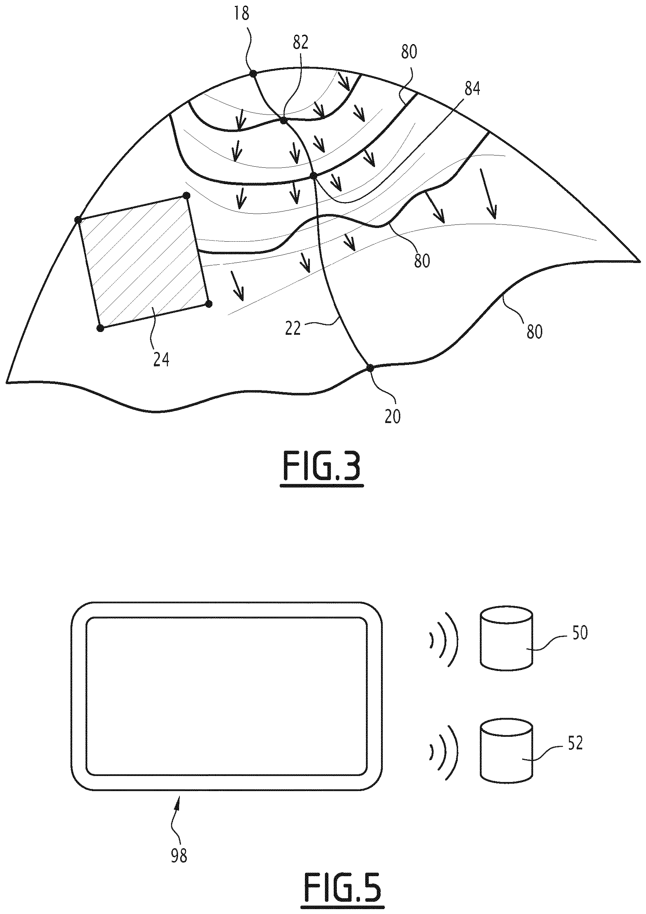

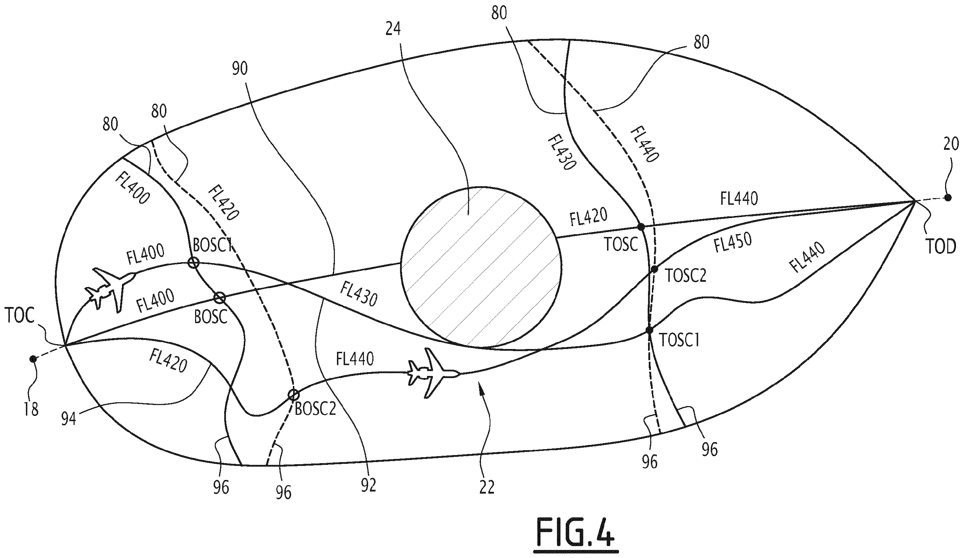

Il est également propre à guider l'aéronef pour lui faire suivre une trajectoire prédéterminée entre un premier point géographique 18 d'origine et un deuxième point géographique 20 de destination (représentés schématiquement sur les figures 3 et 4).

Le système 16 de gestion et de suivi des différents systèmes avion est notamment destiné à permettre à l'équipage de suivre et éventuellement de piloter l'ensemble des systèmes aéronef. Il est propre en particulier à déterminer un état de fonctionnement de l'aéronef, notamment la présence de défauts et de pannes présents sur l'aéronef au sol ou/et en vol. Comme on le verra plus bas, le système de calcul de mission 10 selon l'invention est raccordé au système 16 pour prendre en compte l'état de l'avion dans les calculs de mission.

La mission effectuée par l'aéronef comporte au moins une étape 22 (ou « leg ») entre un premier point géographique 18 d'origine et un deuxième point géographique 20 de destination. Dans certains cas, la mission effectuée par l'aéronef comporte une pluralité d'étapes 22 successives, le deuxième point géographique 20 de destination d'une première étape constituant le premier point géographique 18 d'origine d'une deuxième étape.

La mission est effectuée en suivant des spécifications opérationnelles qui comprennent notamment un contexte de mission et un contexte avion.

Le contexte de mission comporte par exemple au moins une contrainte d'opération, notamment un nombre de passagers à transporter, un poids maximum au décollage lié notamment à une longueur de piste disponible, une charge en carburant de navigation, une charge en carburant de réserve, un horaire de départ ou/et un horaire d'arrivée imposés, une distance maximale à parcourir, et/ou une distance à un terrain alternatif en route.

En référence à la figure 2, le contexte de mission comprend avantageusement des contraintes de navigation, comme par exemple des zones 24 ou des niveaux de vol interdits, des routes 26 aériennes ou des niveaux de vol imposés, ou plus globalement des zones de vol libre ou/et des zones de vol imposé par les voies aériennes.

Le contexte de mission comprend avantageusement des contraintes météorologiques telles que des zones 28 de formation de gel ou d'évitement météorologique (cumulonimbus par exemple).

Le contexte de mission comprend éventuellement aussi des contraintes de confort passager, notamment des zones 30 de turbulences à éviter, en particulier en fonction d'un niveau de turbulences souhaité, choisi par exemple parmi un niveau faible, un niveau moyen, et un niveau fort de turbulences, ou des zones 32 de couverture de télécommunication par satellite pour permettre une télécommunication entre l'aéronef et le monde extérieur notamment au sol, en particulier choisi parmi un niveau faible, un niveau moyen et un bon niveau de possibilité de communication.

Le contexte avion peut comprendre des contraintes d'utilisation liées à des autorisations à partir (ou « dispatch ») ou/et des contraintes liées à un état particulier de l'aéronef en termes de défauts et/ou de pannes sur un ou plusieurs équipements de l'aéronef.

Par exemple, une autorisation à partir liée à certains défauts de l'aéronef peut imposer un niveau de vol maximal et/ou une vitesse maximale. Un défaut de rentrée du train d'atterrissage ou d'un volet peut également imposer une contrainte de consommation en carburant augmentée.

Le système de calcul de mission 10 est destiné à établir une trajectoire de l'aéronef pour effectuer l'étape 22 entre au moins un premier point géographique 18 d'origine et au moins un deuxième point géographique 20 de destination, en tenant compte des spécifications opérationnelles, et notamment du contexte de mission et du contexte avion.

La trajectoire obtenue par l'intermédiaire du système de calcul de mission 10 inclut la route de l'aéronef en latitude et en longitude, ainsi que le profil de vol en altitude.

Avantageusement, le système de calcul de mission 10 est en outre propre à établir des paramètres de plan de vol, notamment le poids et l'équilibre de l'aéronef, le carton de décollage et d'atterrissage (c'est-à-dire les données de vol pour le pilote relative au guidage telles que les vitesses V1, V2, VR sur la piste, l'accélération au lâcher des freins, le régime moteur au décollage, et/ou l'assiette au décollage) ainsi que le calcul des masses limites au décollage et à l'atterrissage, la météorologie à basse vitesse (c'est-à-dire en surface) et à grande vitesse (c'est-à-dire en route), les informations de contrôle aérien (service de diffusion ATIS pour « Automated Terminal Information Service », e-NOTAM pour « Notice to airmen » , fréquence de télécommunications, FIRS pour « Flight Information Régions », centre de contrôle aérien), et/ou les terrains alternatifs disponibles à destination, et en cours de route.

En référence à la figure 1, le système de calcul de mission 10 comporte un moteur de calcul 40 et avantageusement, une interface utilisateur 42 de paramétrage et de restitution formant une platine de mission.

L'interface utilisateur 42 comporte par exemple au moins un écran 44, et au moins un organe 46 de sélection et de saisie d'information par l'utilisateur, qui peut être un clavier réel ou virtuel, une souris et/ou un système tactile.

L'interface utilisateur 42 est propre à autoriser l'utilisateur à saisir au moins une partie des spécifications opérationnelles, notamment les points géographiques 18, 20 d'origine et de destination, des points de passage, des horaires souhaités, des charges souhaitées, un vent maximum sur la trajectoire, etc

Elle est propre avantageusement à permettre à l'utilisateur de définir au moins une partie du contexte de mission, en particulier les contraintes de navigation et de confort passager, et/ou de définir au moins une partie du contexte avion.

Un exemple d'interface 42 est décrit dans la demande de brevet intitulée « Système de calcul de mission d'un aéronef, comportant une platine de mission et procédé associé » déposée conjointement par la Demanderesse.

Le moteur de calcul 40 est connecté à l'interface 42. Il est avantageusement raccordé également au système de conduite de vol 14, au système de gestion et de suivi 16.

Il est propre à interroger une base de données 50 météorologique et/ou une base de données 52 d'information de navigation, par exemple par l'intermédiaire d'un réseau de données, notamment un réseau de données sans fil.

La base de données météorologique 50 contient des données météorologiques actuelles et prédictives dans la zone de navigation de l'aéronef entre le point d'origine 18 et le point de destination 20.

Ces données météorologiques sont fournies à plusieurs niveaux de vol d'altitudes, par exemple tous les 304 m (1000 pieds), à une altitude comprise par exemple entre 0 m et 15545 m (51000 pieds).

Les données météorologiques sont fournies en altitude mais aussi « autour du plan de vol » pour fournir un composant météorologique évolutif dans le temps.

Ces données météorologiques incluent notamment la vitesse et la direction du vent, la température, la pression, les précipitations, les phénomènes dangereux (gel, orages / cumulonimbus), la turbulence, le niveau de la tropopause, les nuages de cendre volcanique, les nuages de poussière / sable, la visibilité, ainsi que les observations aéronautiques sur zone ou en route (METAR, TAF, PIREPS)... Elles comportent éventuellement la définition et l'évolution dans le temps et dans l'espace des coordonnées géographiques de zones 28 de formation de gel ou d'évitement météorologique et/ou de zones de turbulences 30.

La base de données d'information de navigation 52 contient des données d'information sur les terrains au point d'origine 18 et au point de destination 20, et entre ces points 18, 20. La base de données d'information de navigation 52 comporte avantageusement une sous-base de données de navigation (points de passage ou « waypoints » en anglais, routes, etc.) et une sous-base de données aéroports (longueurs de piste, orientation des pistes, pentes, etc.)

Elle contient avantageusement la définition des coordonnées géographiques de zones ou/et de niveaux de vol interdits 24, notamment en raison de données géopolitiques, et/ou de routes 26 aériennes imposées.

Elle comporte éventuellement la définition de zones 32 de couverture de télécommunications par satellite.

Le moteur de calcul 40 comporte au moins un calculateur comprenant au moins un processeur 54 et une mémoire 56. La mémoire 56 contient des modules logiciels propres à être exécutés par le processeur 54.

En particulier, la mémoire 56 contient un module logiciel 58 d'initialisation de spécifications de mission, propre à acquérir des spécifications opérationnelles de la mission à partir notamment de l'interface 42, et un module logiciel 60 de récupération de données météorologiques à partir de la base de données 50.

La mémoire 56 contient en outre un module logiciel 62 de détermination de performances avion, en fonction des spécifications de mission, des données météorologiques et du contexte avion, et un module logiciel 64 de calcul d'une trajectoire avion, en fonction des performances avion déterminées, des données météorologiques et des spécifications de mission.

Le module d'initialisation 58 est propre à acquérir les spécifications opérationnelles de la mission à partir de l'interface 42, et/ou du système de gestion et de suivi 16.

Le module de récupération 60 est propre à interroger la base de données météorologique 50 pour obtenir notamment les vitesses et les directions du vent entre le point d'origine 18 et le point de destination 20, à plusieurs niveaux de vol.

Le module de détermination 62 comporte une application 66 logicielle de détermination du poids et de l'équilibre de l'aéronef, destinée à déterminer le centre de gravité de l'aéronef, une application logicielle 68 de détermination de performances haute vitesse, et avantageusement une application logicielle 70 de détermination de performances basse vitesse.

L'application 66 de détermination du poids et de l'équilibre de l'aéronef est propre à déterminer la position du centre de gravité de l'aéronef en l'absence de carburant dans l'aéronef (ou « Zero Fuel Weight Center of Gravity ») et la masse de l'aéronef en l'absence de carburant dans l'aéronef (ou « Zéro Fuel Weight»), en fonction de la masse à vide de l'aéronef, des équipements embarqués dans l'aéronef, des passagers et/ou du fret embarqué, et de leur position dans l'aéronef, ainsi qu'une surveillance du domaine de vol de l'avion (diagramme masse - centrage).

L'application de détermination de performances haute vitesse 68 est propre à déterminer la masse de carburant à embarquer dans l'aéronef sur une trajectoire donnée, par exemple une trajectoire orthodromique entre le point d'origine 18 et le point de destination 20, en utilisant la position du centre de gravité et la masse de l'aéronef en l'absence de carburant dans l'aéronef (ou « Zéro Fuel Weight») déterminées par l'application 66, une vitesse air prédéterminée, par exemple saisie ou calculée à partir des données saisies par l'interface utilisateur 42, des données météorologiques récupérées à partir du module 60, notamment des vitesses de vent et des températures et éventuellement du contexte avion, par exemple le type et l'âge des moteurs, récupéré à partir du module d'initialisation 58.

L'application de détermination de performances basse vitesse 70 est propre à déterminer notamment la masse maximale de l'aéronef (et du carton de décollage) permettant à l'aéronef de décoller et/ou d'atterrir sur un terrain, en fonction de données de longueurs de pistes récupérées à partir de la base de données 52, et de données météorologiques récupérées à partir du module 60.

Selon l'invention, le module de calcul 64 est configuré pour calculer au moins une courbe d'iso-déplacement de l'aéronef, notamment au moins une courbe isochrone ou/et au moins une courbe d'iso-consommation de carburant, à partir d'au moins un point de la trajectoire et à déterminer la position d'au moins un autre point de la trajectoire sur la courbe d'iso-déplacement de l'aéronef.

Le module de calcul 64 est propre à calculer au moins une trajectoire 22 entre le point d'origine 18 et le point de destination 20 en déterminant des courbes d'iso-déplacement de l'aéronef, en particulier des courbes isochrones 80.

Dans l'exemple illustré par les figures 3 et 4, le module de calcul 64 est propre, à partir de tout point 82 d'une trajectoire 22 en cours, d'établir au moins une courbe isochrone 80 sur un incrément de temps prédéterminé à partir du point 82 de la trajectoire, en tenant compte de la vitesse air choisie, des données météorologiques, des performances avion déterminées par le module de détermination 62, en particulier en utilisant les applications 66 et 68, et des spécifications opérationnelles définies par le module d'initialisation 58. Il est ensuite propre à choisir une trajectoire en se fondant sur les courbes isochrones 80 déterminées.

Par définition, une courbe isochrone 80 est une courbe reliant les points accessibles à l'aéronef à partir d'un point donné 82 en un temps donné qui correspond à un ou plusieurs incréments de temps. Chaque incrément de temps est par exemple compris entre 10 minutes et 1 heure, notamment entre 15 minutes et 30 minutes.

Dans cet exemple, chaque courbe isochrone 80 est déterminée à partir d'un point donné 82 en calculant à partir du point donné 82 tous les points accessibles à l'aéronef, à une vitesse air donnée, en tenant compte des données météorologiques, notamment de la direction et de l'intensité du vent, telles que fournies par le module de récupération 60 et des performances avion, telles que déterminées par le module de détermination 62.

Avantageusement, le module de calcul 64 est propre à calculer une succession de courbes isochrones 80, en calculant, à partir de chaque point 82 d'une courbe isochrone 80 donnée tous les points accessibles à l'aéronef durant un incrément de temps donné pour la vitesse donnée et/ou pour la consommation donnée en carburant, puis à répéter ce calcul à partir de tout point de la courbe isochrone 80 ainsi calculée.

Le module de calcul 64 est propre à sélectivement exclure les points qui sont situés dans les zones ou niveaux de vol interdits 24, dans les zones 28 de formation de gel ou d'événements météorologiques et/ou dans les zones de turbulences 30. Au contraire, le module de calcul 24 est propre à exclure également les points qui ne seraient pas situés dans une zone de couverture satellite 32 ou le long d'une route aérienne imposée 26.

Avantageusement, le module de calcul 64 est propre à calculer les courbes isochrones 80 à partir d'un point 82, situé à un premier niveau de vol au même niveau de vol que le point 82, et à plusieurs niveaux de vol voisins du premier niveau de vol au-dessus et en dessous du premier niveau de vol.

Le module de calcul 64 est ensuite propre à définir une trajectoire 22 en choisissant sur des courbes isochrones 80 successives des points successifs de la trajectoire 22.

Pour définir la trajectoire 22, le module de calcul 64 est propre à calculer une première trajectoire donnée 92 (voir figure 4), et à déterminer, sur la base de la trajectoire donnée 92, au moins un paramètre de mission de l'aéronef, puis à calculer une succession de trajectoires données 94 de l'aéronef, jusqu'à ce que le paramètre de mission converge vers une valeur de paramètre de mission souhaitée.

Le paramètre de mission est par exemple une masse totale au décollage de l'aéronef. Cette masse au décollage est calculée par l'application logicielle 68 sur la base de la consommation estimée sur la trajectoire entre le point d'origine 18 et le point de destination 20 et sur la base d'une charge en passagers et en fret prédéfinie dans les spécifications opérationnelles.

Le module de calcul 64 est ainsi propre à effectuer des itérations de calcul utilisant successivement les applications 66, 68, en faisant varier les trajectoires jusqu'à atteindre une convergence sur la valeur du paramètre de mission.

A chaque itération, le module de calcul 64 est propre à vérifier notamment que la masse au décollage obtenue à l'aide des applications 66, 68 est inférieure ou égale à la masse maximale permettant à l'aéronef de décoller obtenue à l'aide de l'application 70 pour s'assurer que l'aéronef pourra décoller sur le terrain choisi pour le décollage.

Un procédé de calcul d'une mission, mis en oeuvre à l'aide du système 10 selon l'invention, va maintenant être décrit. Ce procédé est mis en oeuvre par exemple lors de la préparation de la mission, pour établir sa faisabilité, pour préparer de manière plus précise la mission, ou pour tenir compte d'un changement de dernière minute dans une mission déjà préparée.

En variante, ce procédé est mis en oeuvre lors du suivi de la mission, ou pour tester des hypothèses de modification de la mission, pour l'optimiser, ou pour la reconfigurer.

Initialement, l'utilisateur, notamment l'équipage, saisit au moins une partie des spécifications opérationnelles à l'aide de l'interface de paramétrage 42. L'utilisateur définit par exemple pour chaque étape de la mission, le point géographique d'origine 18, le point géographique de destination 20 et éventuellement, un nombre de passagers à transporter, une vitesse air souhaitée, un horaire de départ ou/et un horaire d'arrivée imposé, une distance maximale à parcourir.

Puis, lorsqu'il souhaite définir une trajectoire 22 possible, il active le moteur de calcul 40. Le module d'initialisation 58 récupère les spécifications opérationnelles à partir notamment de l'interface 42 pour obtenir toutes les informations sur chaque étape de la mission.

Le module d'initialisation 58 récupère avantageusement d'autres spécifications opérationnelles à partir du système de gestion et de suivi 16 de l'aéronef.

Cette étape initialise les spécifications opérationnelles liées au contexte de mission et au contexte avion, par exemple la présence de pannes ou d'autorisations à partir. Cette étape initialise également les spécifications opérationnelles de confort passager, notamment en termes de connectivité et de niveau de turbulences. Cette étape de spécification des données météo acceptable est avantageusement faite au niveau de l'interface utilisateur 42.

L'initialisation est faite en considérant une trajectoire purement orthodromique en atmosphère standard (données de vol « parfaites »).

Puis, le module 60 de récupération de données météorologiques interroge la base de données météorologique 50 pour obtenir notamment les vitesses et les directions du vent entre le point d'origine 18 et le point de destination 20, à plusieurs niveaux de vol.

Le module de détermination de performances avion 62 est alors activé. L'application 66 de détermination du poids et de l'équilibre détermine la masse de l'aéronef et la position du centre de gravité de l'aéronef en l'absence de carburant dans l'aéronef (« Zéro Fuel Weight » et « Zéro Fuel Weight Center of Gravity »), en fonction de la masse à vide de l'aéronef, des équipements embarqués dans l'aéronef, des passagers et/ou du fret embarqué, et de leur position dans l'aéronef

Sur cette base, sur la base des données météorologiques récupérées par le module de récupération 60, sur la base du contexte avion récupéré à partir du module d'initialisation 58, et sur la base de la vitesse air souhaitée, l'application de détermination de performances haute vitesse 68 détermine une trajectoire initiale 90 de l'aéronef et la consommation de l'aéronef associée en utilisant la position du centre de gravité déterminée par l'application 66.

Comme illustré par la figure 4, il calcule une trajectoire initiale orthodromique 90 en atmosphère standard en utilisant un ou plusieurs niveaux de vol d'altitudes.

Il calcule alors l'ensemble des paramètres de mission, en particulier la route, l'heure d'arrivée, le profil de vol, et la consommation en carburant, ce qui permet d'en déduire notamment la masse au décollage.

Puis le module de calcul de trajectoire 64 est mis en oeuvre. Sur la base de la masse au décollage précédemment obtenue, le module 64 calcule une première trajectoire optimisée 92 en déterminant les courbes d'iso-déplacement de l'aéronef, ici les courbes isochrones 80, à partir d'un sommet de montée (TOC, pour « Top of Climb ») calculé à partir de la position du point d'origine 18 jusqu'à un sommet de descente (TOD, pour « Top of Descent ») calculé à partir de la position du point de destination 20.

Les courbes d'iso-déplacement de l'aéronef sont déterminées par incréments de temps, pour plusieurs combinaisons de niveaux de vol verticaux (FL400, FL420, etc.), en choisissant par exemple comme base les niveaux de vol définis par la trajectoire précédente.

Le module de calcul 64 tient compte en particulier des zones 24 ou niveaux de vol interdits, des zones 28 de formation de gel à éviter, des zones 30 de turbulences à éviter, des routes aériennes imposées 26, et/ou des zones 32 de couverture satellite.

Pour chaque niveau de vol, le module de calcul 64 choisit à partir de chaque point 82 de la trajectoire un point ultérieur de la trajectoire situé sur une courbe isochrone 80. Le module de calcul 64 définit ainsi un tronçon de trajectoire possible associé à chaque niveau de vol.

Le module de calcul 64 limite le nombre de niveaux de vol possibles à chaque incrément en maintenant le niveau de vol constant jusqu'à au moins une courbe 96 de changement de niveaux de vol. La courbe 96 de changement de niveau de vol est définie par exemple pour chaque niveau de vol par un délestage de carburant donné, correspondant à une durée de vol prédéfinie à Mach constant, par exemple comprise entre 1h et 2h.

Le module de calcul 64 définit ensuite une trajectoire 92 en choisissant les tronçons de trajectoire correspondant à la combinaison de niveaux de vol verticaux optimale à chaque itération.

Ainsi dans l'exemple représenté sur la figure 4, le module de calcul détermine les courbes d'iso-déplacement correspondant à une pluralité de niveaux de vol (par ex FL 400 et FL420) depuis un point initial (ici le TOC) jusqu'à la première courbe 96 de changement de niveau de vol pour définir au moins un premier tronçon de trajectoire [TOC ; BOSC1], [TOC ; BOSC2] pour chaque niveau de vol, puis les courbes d'iso-déplacement à partir de la première courbe de changement de niveau de vol 96 pour une pluralité de niveaux de vol (ici FL430, FL 440) jusqu'à une autre courbe de changement de niveau de vol 96 pour définir au moins un deuxième tronçon de trajectoire [BOSC1 ; TOSC1], [BOSC2 ; TOSC2] et répète ces calculs jusqu'à atteindre un point final (ici le TOD). Il définit ensuite au moins une trajectoire 92 en associant des tronçons de trajectoires successifs parmi les tronçons de trajectoires définis pour chaque pluralité de niveaux de vol entre les courbes 96 de changement de niveau de vol.

Il calcule alors l'ensemble des paramètres de mission comme précédemment, et détermine la différence entre le paramètre de mission à optimiser (par exemple la masse au décollage) pour la trajectoire initiale 90 et le paramètre de mission à optimiser pour la trajectoire 92.

Il effectue alors de nouveaux calculs de trajectoires, comme décrit précédemment, en utilisant les courbes isochrones 80 jusqu'à ce que le paramètre de mission, ici la masse au décollage, converge vers une valeur de paramètres de mission souhaitée.

La convergence est par exemple déterminée lorsque la différence entre la valeur du paramètre de mission pour la trajectoire déterminée à l'itération précédente et celle déterminée à l'itération courante est inférieure à une valeur prédéterminée.

En particulier, dans le cas de la masse au décollage, la différence entre la masse au décollage pour la trajectoire déterminée à l'itération précédente et celle déterminée à l'itération courante doit être inférieure à une masse prédéterminée par exemple égale à 100 livres.

En variante, le paramètre de mission est la masse à l'atterrissage ou la distance parcourue le long de la trajectoire.

Avantageusement, à chaque itération ou après convergence, l'application logicielle 70 de détermination de performances basse vitesse est mise en oeuvre pour vérifier que les paramètres de mission obtenus sont compatibles avec les terrains sur lesquels l'aéronef est destiné à décoller et/ou à atterrir.

Lorsque la convergence est atteinte, une trajectoire finale optimisée 94 est obtenue. Le module de calcul 64 détermine alors de manière précise les paramètres de mission notamment la route suivie, le poids et l'équilibre de l'aéronef, le carton de décollage et atterrissage, en utilisant l'application de performances basse vitesse 70, la météorologie haute vitesse et basse vitesse.

Éventuellement, le module de calcul 64 interroge la base de données d'information de navigation 52 pour obtenir en outre les informations de contrôle aérien (service de diffusion ATIS, e-NOTAM, fréquence de télécommunications, FIRS pour « Flight Information Régions », centre de contrôle aérien), et/ou les terrains alternatifs disponibles à destination, et en cours de route.

Puis, l'interface 42 affiche au moins en partie les paramètres de mission, en particulier la route suivie, et le profil de vol.

Dans l'exemple qui vient d'être décrit, la trajectoire 22 est optimisée à une vitesse air donnée pour obtenir la masse de carburant la plus faible possible, tout en respectant les spécifications opérationnelles.

Dans une variante, notamment lorsque le terrain de départ présente une piste courte ou un obstacle à franchir en bout de piste, l'application logicielle 70 de détermination de performances basse vitesse est mise en oeuvre à l'initialisation du procédé pour déterminer la masse maximale pouvant être embarquée (carburant + charge utile). La masse maximale de carburant pouvant être embarquée compte tenu de la charge utile est alors utilisée comme une contrainte par le module 64 de calcul de trajectoire.

La valeur de cette contrainte peut alors être modifiée par l'équipage, notamment en modifiant le nombre de passagers ou/et la masse de fret embarqué.

Le système de calcul 10 selon l'invention est donc particulièrement efficace pour déterminer des trajectoires optimales d'un aéronef lors d'une mission, de manière beaucoup plus précise qu'avec les outils commerciaux classiques, puisque le calcul des trajectoires est effectué par la méthode des isochrones, en tenant compte du contexte de la mission, et du contexte avion.

Ceci permet aux trajectoires obtenues d'être particulièrement adaptées aux zones 24, 28, 30 à éviter, et de suivre au contraire les routes 26 et les zones 32 dans lesquelles l'aéronef doit circuler.

L'équipage peut en outre facilement modifier l'une ou l'autre des spécifications de mission en fonction des impératifs utilisateurs, ou de changements de dernière minute, tout en obtenant des résultats rapides dans le calcul.

Dans la variante illustrée par la figure 5, le système de calcul de 10 est intégré au sein d'un bagage de vol électronique (« Electronic Flight Bag » ou « EFB » en anglais) se présentant par exemple sous la forme d'un dispositif électronique portable 98.

Le dispositif électronique portable est par exemple raccordé aux bases de données 50, 52 par une liaison de données sans fil suivant un protocole de transmission sans fil par exemple de type Wifi (par exemple suivant la Norme IEEE 802.11), ou Bluetooth (par exemple suivant la Norme IEEE 802.15-1-2005).

Dans une autre variante, chaque courbe d'iso-déplacement calculée par le module de calcul 64 est une courbe d'iso-consommation de carburant.

Le module de calcul 64 est propre, à partir de tout point 82 d'une trajectoire 22 en cours d'établir au moins une courbe d'iso-consommation de carburant sur un incrément de carburant consommé prédéterminé à partir du point 82 de la trajectoire, en tenant compte de la vitesse air choisie, des données météorologiques, des performances avion déterminées par le module de détermination 62, et des spécifications opérationnelles définies par le module d'initialisation 58. Il est ensuite propre à choisir une trajectoire en se fondant sur les courbes courbe d'iso-consommation de carburant déterminées.

Par définition, une courbe d'iso-consommation de carburant est une courbe reliant les points accessibles à l'aéronef à partir d'un point donné 82 avec une consommation en carburant donnée qui correspond à un ou plusieurs incréments de carburant consommé. Chaque incrément de temps consommé est choisi à une valeur constante par exemple comprise entre 22,7 kg (50 livres) et 453,6 kg (1000 livres), notamment entre 36,3 kg (80 livres) et 54,4 kg (120 livres).

Dans cet exemple, chaque courbe d'iso-consommation de carburant est déterminée à partir d'un point donné 82 en calculant à partir du point donné 82 tous les points accessibles à l'aéronef, à une vitesse air donnée, en tenant compte des données météorologiques, notamment de la direction et de l'intensité du vent, tels que fournies par le module de récupération 60 et des performances avion, telles que déterminées par le module de détermination 62.

Avantageusement, le module de calcul 64 est propre à calculer une succession de courbes d'iso-consommation de carburant, en calculant, à partir de chaque point 82 d'une courbe d'iso-consommation de carburant donnée tous les points accessibles à l'aéronef pour un incrément de carburant donné pour la vitesse donnée, puis à répéter ce calcul à partir de tout point de la courbe d'iso-consommation de carburant ainsi calculée.

Comme précédemment, le module de calcul 64 est propre à sélectivement exclure les points qui sont situés dans les zones ou niveaux de vol interdits 24, dans les zones 28 de formation de gel ou d'événements météorologiques et/ou dans les zones de turbulences 30. Au contraire, le module de calcul 24 est propre à exclure également les points qui ne seraient pas situés dans une zone de couverture satellite 32 ou le long d'une route aérienne imposée 26.

Avantageusement, le module de calcul 64 est propre à calculer les courbes d'iso-consommation de carburant à partir d'un point 82, situé à un premier niveau de vol au même niveau de vol que le point 82, et à plusieurs niveaux de vol voisins du premier niveau de vol au dessus et en dessous du premier niveau de vol.

Le module de calcul 64 est ensuite propre à définir une trajectoire 22 en choisissant sur des courbes d'iso-consommation de carburant successives des points successifs de la trajectoire 22.

Dans une variante des méthodes de calcul décrites précédemment (isochrone ou iso-carburant), la trajectoire est modifiée à chaque itération effectuée par le module de calcul 64 uniquement sur un plan vertical, en suivant une trajectoire prédéfinie dans le plan horizontal (par exemple une route de navigation prédéfinie) et en optimisant uniquement les niveaux de vol.

Dans une autre variante, le module de calcul 64 modifie la trajectoire verticale et également la trajectoire horizontale, mais uniquement sur des routes aériennes prédéfinies.

Dans encore une autre variante, le module de calcul 64 modifie la trajectoire verticale et la trajectoire horizontale en autorisant uniquement des déplacements directs vers un point de passage donné (« direct to ») et des modifications latérales limitées par rapport à une route aérienne prédéfinie.

Enfin, le module de calcul 64 peut appliquer l'une ou l'autre de ces variantes sur un seul et même vol en appliquant des points de pivots qui correspondront par exemple à différents espaces aériens avec différentes règlementations.

Dans une autre variante la trajectoire 92 est calculée par le module de calcul 64 en procédant depuis le point géographique de destination 20 vers le point géographique d'origine 18.

## Revendications

1. Système (10) de calcul de mission d'un aéronef, comportant un moteur de calcul (40) de trajectoires de l'aéronef lors de la mission, comprenant :
- un module d'initialisation (58) de spécifications d'une mission incluant au moins un point géographique d'origine (18), un point géographique de destination (20), et des spécifications opérationnelles de mission ;
- un module de récupération (60) d'un contexte météorologique dans l'espace aérien entre le point géographique d'origine (18) et le point géographique de destination (20) ;
- un module de calcul de trajectoires (64), propre à calculer une trajectoire de mission entre le point géographique d'origine (18) et le point géographique de destination (20) en fonction de performances avion et des spécifications opérationnelles de mission,
**caractérisé en ce que** le système (10) comporte un module de détermination (62) de performances avion, propre à déterminer les performances avion en fonction des spécifications opérationnelles de mission et du contexte météorologique,
et **en ce que** le module de calcul de trajectoires (64) est configuré pour calculer une pluralité de courbes d'iso-déplacement à plusieurs niveaux de vol, notamment une pluralité de courbes isochrones (80) ou/et une pluralité de courbes d'iso-consommation de carburant à partir d'au moins un point (82) de la trajectoire et est propre à déterminer chaque point (82) de la trajectoire sur une courbe d'iso-déplacement par rapport à un autre point (84) de la trajectoire,
dans lequel le module de calcul (64) est configuré pour déterminer les courbes d'iso-déplacement correspondant à une pluralité de niveaux de vol depuis un point initial jusqu'à une première courbe (96) de changement de niveau de vol pour définir au moins un premier tronçon de trajectoire pour chaque niveau de vol, puis les courbes d'iso-déplacement à partir de la première courbe (96) de changement de niveau de vol pour une pluralité de niveaux de vol jusqu'à une autre courbe de changement de niveau de vol (96) pour définir au moins un deuxième tronçon de trajectoire pour chaque niveau de vol, puis pour définir ensuite au moins une trajectoire (92) en associant des tronçons de trajectoires successifs choisis parmi les tronçons de trajectoires définis pour chaque pluralité de niveaux de vol.

2. Système (10) selon la revendication 1, dans lequel le module de calcul (64) est propre à choisir un autre point (84) de la trajectoire sur la courbe d'iso-déplacement en fonction de spécifications opérationnelles et/ou de performances avion.

3. Système (10) selon l'une quelconque des revendications précédentes, dans lequel le module de détermination (62) des performances avion comporte une application (66) de calcul de poids et d'équilibrage de l'aéronef propre à calculer un centre de gravité de l'aéronef et une application (68) de calcul de performances à grande vitesse en fonction du centre de gravité calculé, et des spécifications opérationnelles de l'aéronef, le module de calcul (64) étant propre à calculer au moins un paramètre de mission sur la base de la trajectoire de mission en utilisant au moins l'application (68) de calcul de performances à grande vitesse.

4. Système (10) selon l'une quelconque des revendications précédentes, dans lequel le module de calcul (64) de trajectoire est propre à calculer une première trajectoire donnée (92), et à déterminer, sur la base de la première trajectoire donnée (92), au moins un paramètre de mission de l'aéronef, puis à calculer au moins une autre trajectoire donnée (94) de l'aéronef, jusqu'à ce que le paramètre de mission converge vers une valeur de paramètre de mission souhaitée.

5. Système (10) selon la revendication 3 ou 4, dans lequel le paramètre de mission est une masse au décollage ou à l'atterrissage de l'aéronef pour réaliser la trajectoire de mission ou une distance totale parcourue par l'aéronef sur la trajectoire de mission.

6. Système (10) selon l'une quelconque des revendications 3 à 5, dans lequel le paramètre de mission est une masse au décollage ou à l'atterrissage de l'aéronef sur un terrain donné, le module de détermination (62) des performances avion comportant une application (70) de détermination de performances basse vitesse propre à déterminer la masse maximale de l'aéronef permettant à l'aéronef de décoller et/ou d'atterrir sur le terrain donné,
le module de calcul (64) étant propre à vérifier que la masse au décollage ou à l'atterrissage de l'aéronef obtenue à l'aide de l'application (68) de calcul de performances à grande vitesse est inférieure ou égale à la masse maximale permettant à l'aéronef de décoller ou d'atterrir sur le terrain donné obtenue à l'aide de l'application (70) de détermination de performances basse vitesse.

7. Système (10) selon l'une quelconque des revendications précédentes, dans lequel la ou chaque spécification opérationnelle inclut un contexte avion, notamment un type d'équipement défectueux, une autorisation à partir ou une panne, ou/et inclut un contexte de mission, notamment une route aérienne imposée (26), une zone interdite (24) ou une zone de passage souhaitée (32), le module de détermination (62) de performances avion étant propre à déterminer les perfomances avion en fonction du contexte avion et/ou du contexte de mission.

8. Procédé de calcul d'une trajectoire d'aéronef en vue d'une mission, comportant la fourniture d'un système de calcul (10) selon l'une quelconque des revendications précédentes, le système de calcul (10) effectuant les étapes suivantes ;
- acquisition de spécifications d'une mission incluant au moins un point géographique d'origine (18), un point géographique de destination (20), et des spécifications opérationnelles de mission, avec le module d'initialisation (58) ;
- récupération d'un contexte météorologique dans l'espace aérien entre le point géographique d'origine (18) et le point géographique de destination (20) par le module de récupération (60) ;
- détermination de performances avion en fonction des spécifications opérationnelles et du contexte météorologique par le module de détermination (62) ;
- calcul d'au moins une trajectoire avion entre le point géographique d'origine (18) et le point géographique de destination (20) en fonction des performances avion et des spécifications opérationnelles de mission ,
le calcul de trajectoire comprenant le calcul d'une pluralité de courbes d'iso-déplacement à plusieurs niveaux de vol, notamment une pluralité de courbes isochrones (80) ou/et une pluralité de courbes d'iso-consommation de carburant à partir d'au moins un point (82) de la trajectoire, chaque point (82) de la trajectoire étant situé sur une courbe d'iso-déplacement par rapport à un autre point (84) de la trajectoire, dans lequel le calcul de trajectoire comprend la détermination de courbes d'iso-déplacement correspondant à une pluralité de niveaux de vol depuis un point initial jusqu'à une première courbe (96) de changement de niveau de vol pour définir au moins un premier tronçon de trajectoire pour chaque niveau de vol, puis la détermination de courbes d'iso-déplacement à partir de la première courbe (96) de changement de niveau de vol pour une pluralité de niveaux de vol jusqu'à une autre courbe de changement de niveau de vol (96) pour définir au moins un deuxième tronçon de trajectoire pour chaque niveau de vol, puis la définition ensuite d'au moins une trajectoire (92) en associant des tronçons de trajectoires successifs choisis parmi les tronçons de trajectoires définis pour chaque pluralité de niveaux de vol.

9. Procédé selon la revendication 8, comprenant le choix par le module de calcul de chaque point (84) de la trajectoire sur la courbe d'iso-déplacement en fonction de spécifications opérationnelles et/ou de performances avion.

10. Procédé selon l'une quelconque des revendications 8 ou 9, dans lequel le calcul par le module de calcul (64) comporte un calcul de poids et d'équilibrage de l'aéronef pour calculer un centre de gravité de l'aéronef, un calcul de performances à grande vitesse de l'aéronef en fonction du centre de gravité calculé, et des spécifications opérationnelles de l'aéronef, et un calcul d'un paramètre de mission sur la base de la trajectoire de mission en utilisant l'application (68) de calcul de performances à grande vitesse.

11. Procédé l'une quelconque des revendications 8 à 10, comportant le calcul par le module de calcul (64) d'une première trajectoire donnée (92), et la détermination, sur la base de la trajectoire donnée (92), de la valeur d'au moins un paramètre de mission de l'aéronef, puis le calcul par le module de calcul (64) d'au moins une autre trajectoire donnée (94) de l'aéronef et d'une autre valeur du paramètre de mission de l'aéronef, jusqu'à ce qu'un critère de convergence sur la valeur du paramètre de mission de l'aéronef soit atteint.

## Patentansprüche

1. System (10) zum Berechnung der Mission eines Luftfahrzeugs, umfassend einen Berechnungsmotor (40) für Flugbahnen des Luftfahrzeugs während der Mission, umfassend:
- ein Modul zum Initialisieren (58) von Spezifikationen einer Mission, die mindestens einen geografischen Ursprungspunkt (18), einen geografischen Zielpunkt (20) und operative Missionsspezifikationen beinhaltet;
- ein Abrufmodul (60) eines meteorologischen Kontexts im Luftraum, das sich zwischen dem geografischen Ursprungspunkt (18) und dem geografischen Zielpunkt (20) erstreckt;
- ein Flugbahnberechnungsmodul (64), das geeignet ist, eine Missionsflugbahn zwischen dem geografischen Ursprungspunkt (18) und dem geografischen Zielpunkt (20) auf der Grundlage von Luftfahrzeugleistungen und operativen Missionsspezifikationen zu berechnen,
**Dadurch gekennzeichnet, dass** das System (10) ein Modul (62) zur Bestimmung der Luftfahrzeugleistung beinhaltet, das geeignet ist, Luftfahrzeugleistungen basierend auf den operativen Missionsspezifikationen und dem meteorologischen Kontext zu bestimmen,
und dass das Flugbahnberechnungsmodul (64) so konfiguriert ist, dass es eine Vielzahl von Iso-Bewegungskurven auf mehreren Flugebenen berechnet, insbesondere eine Vielzahl von Isochronen (80) oder/und eine Vielzahl von Iso-Treibstoffverbrauchskurven aus mindestens einem Punkt (82) der Flugbahn und dazu geeignet ist, jeden Punkt (82) der Flugbahn auf einer Iso-Bewegungskurve in Bezug auf einen anderen Punkt (84) der Flugbahn zu bestimmen,
wobei das Berechnungsmodul (64) konfiguriert ist, um die Iso-Bewegungskurven entsprechend einer Vielzahl von Flugebenen von einem Anfangspunkt bis zu einer ersten Flugebenen-Wechselkurve (96) zu bestimmen, um mindestens einen ersten Flugbahnabschnitt für jede Flugebene zu definieren, dann die Iso-Bewegungskurven von der ersten Flugebenen-Wechselkurve (96) für eine Vielzahl von Flugebenen bis zu einer weiteren Flugebenen-Wechselkurve (96), um mindestens einen zweiten Flugbahnabschnitt für jede Flugebene zu definieren, und dann, um anschließend mindestens eine Flugbahn (92) zu definieren, indem aufeinanderfolgende Flugbahnabschnitte, die aus den für jede Vielzahl von Flugebenen definierten Flugbahnabschnitten ausgewählt werden, miteinander verknüpft werden.

2. System (10) nach Anspruch 1, bei dem das Berechnungsmodul (64) geeignet ist, einen anderen Punkt (84) der Flugbahn auf der Iso-Bewegungskurve in Abhängigkeit von betrieblichen Spezifikationen und/oder der Luftfahrzeugleistung auszuwählen.

3. System (10) nach einem der vorhergehenden Ansprüche, bei dem das Modul (62) zur Bestimmung der Luftfahrzeugleistung eine Anwendung (66) zur Berechnung des Gewichts und der Balance des Luftfahrzeugs umfasst, die geeignet ist, einen Schwerpunkt des Luftfahrzeugs zu berechnen, und eine Anwendung (68) zur Berechnung der Leistung bei hoher Geschwindigkeit, auf der Grundlage des berechneten Schwerpunkts und der betrieblichen Spezifikationen des Luftfahrzeugs, wobei das Berechnungsmodul (64) geeignet ist, mindestens einen Missionsparameter auf der Grundlage der Missionsflugbahn unter Verwendung mindestens der Anwendung (68) zur Berechnung der Hochgeschwindigkeitsleistung zu berechnen.

4. System (10) nach einem der vorhergehenden Ansprüche, wobei das Flugbahnberechnungsmodul (64) dazu geeignet ist, eine erste gegebene Flugbahn (92) zu berechnen, und auf der Grundlage der ersten gegebenen Flugbahn (92) mindestens einen Missionsparameter des Luftfahrzeugs zu berechnen, und dann mindestens eine weitere gegebene Flugbahn (94) des Luftfahrzeugs zu berechnen, bis der Missionsparameter zu einem gewünschten Missionsparameterwert konvergiert.

5. System (10) nach Anspruch 3 oder 4, wobei der Missionsparameter ein Start- oder Landegewicht des Luftfahrzeugs zur Erreichung der Missionsflugbahn oder eine Gesamtstrecke ist, die das Luftfahrzeug auf der Missionsflugbahn zurücklegt.

6. System (10) nach einem der Ansprüche 3 bis 5, bei dem der Missionsparameter ein Start- oder Landegewicht des Luftfahrzeugs auf einem gegebenen Gelände ist, wobei das Modul zur Bestimmung der Luftfahrzeugleistungen (62) eine Anwendung (70) zur Bestimmung der Leistungen bei niedriger Geschwindigkeit umfasst, die geeignet ist, das maximale Gewicht des Luftfahrzeugs zu bestimmen, das es dem Luftfahrzeug ermöglicht, auf dem gegebenen Gelände zu starten und/oder zu landen,
wobei das Berechnungsmodul (64) geeignet ist, zu überprüfen, dass das Start- oder Landegewicht des Luftfahrzeugs, das mit Hilfe der Anwendung (68) zur Bestimmung der Hochgeschwindigkeitsleistung erhalten wird, kleiner ist als das Maximalgewicht, das es dem Luftfahrzeug erlaubt, auf dem gegebenen Gelände zu starten oder zu landen, das mit Hilfe der Anwendung (70) zur Bestimmung der Leistungen bei niedriger Geschwindigkeit erhalten wurde.

7. System (10) nach einem der vorhergehenden Ansprüche, wobei die oder jede betriebliche Spezifikation einen Luftfahrzeugkontext enthält, insbesondere einen fehlerhaften Ausrüstungstyp, eine Startfreigabe oder einen Ausfall, oder/und einen Missionskontext, insbesondere eine vorgeschriebene Flugstrecke (26), ein Sperrgebiet (24) oder ein gewünschtes Überfluggebiet (32), wobei das Modul zur Bestimmung der Luftfahrzeugleistung (62) dazu geeignet ist, die Luftfahrzeugleistung auf der Grundlage des Luftfahrzeugkontexts und/oder des Missionskontexts zu bestimmen.

8. Verfahren zum Berechnen einer Flugbahn eines Luftfahrzeugs für eine Mission, umfassend das Bereitstellen eines Berechnungssystems (10) nach einem der vorhergehenden Ansprüche, wobei das Berechnungssystem (10) die folgenden Schritte ausführt;
- Erfassung von Spezifikationen einer Mission, die mindestens einen geografischen Ursprungspunkt (18), einen geografischen Zielpunkt (20) und operative Missionsspezifikationen beinhaltet, mit dem Modul zum Initialisieren (58);
- Abrufen eines meteorologischen Kontexts im Luftraum zwischen dem geografischen Ursprungspunkt (18) und dem geografischen Zielpunkt (20) durch das Abrufmodul (60);
- Bestimmen der Luftfahrzeugleistung auf der Grundlage der betrieblichen Spezifikationen und des Wetterkontexts durch das Bestimmungsmodul (62) ;
- Berechnung mindestens einer Luftfahrzeugflugbahn zwischen dem geographischen Ursprungspunkt (18) und dem geographischen Zielpunkt (20) auf der Grundlage der Luftfahrzeugleistung und der operativen Missionsspezifikationen, wobei die Flugbahnberechnung die Berechnung einer Vielzahl von Iso-Bewegungskurven auf mehreren Flugebenen, insbesondere eine Vielzahl von Isochronen (80) oder/und eine Vielzahl von Treibstoffverbrauchs-Isokurven ausgehend von mindestens einem Punkt (82) der Flugbahn umfasst, wobei jeder Punkt (82) der Flugbahn auf einer Iso-Bewegungskurve in Bezug auf einen anderen Punkt (84) der Flugbahn liegt,
wobei die Flugbahnberechnung die Bestimmung der Iso-Bewegungskurven entsprechend einer Vielzahl von Flugebenen von einem Anfangspunkt bis zu einer ersten Flugebenen-Wechselkurve (96) umfasst, um mindestens einen ersten Flugbahnabschnitt für jede Flugebene zu definieren, dann die Bestimmung der Iso-Bewegungskurven von der ersten Flugebenen-Wechselkurve (96) für eine Vielzahl von Flugebenen bis zu einer weiteren Flugebenen-Wechselkurve (96), um mindestens einen zweiten Flugbahnabschnitt für jede Flugebene zu definieren, und dann die Bestimmung mindestens einer Flugbahn (92), indem aufeinanderfolgende Flugbahnabschnitte, die aus den für jede Vielzahl von Flugebenen definierten Flugbahnabschnitten ausgewählt werden, miteinander verknüpft werden.

9. Verfahren nach Anspruch 8, bei dem das Berechnungsmodul jeden Punkt (84) der Flugbahn auf der Iso-Bewegungskurve entsprechend den betrieblichen Spezifikationen und/oder der Luftfahrzeugleistungen auswählt.

10. Verfahren nach einem der Ansprüche 8 oder 9, wobei die Berechnung durch das Berechnungsmodul (64) eine Berechnung des Gewichts und der Balance des Luftfahrzeugs zur Berechnung eines Schwerpunkts des Luftfahrzeugs, eine Berechnung der Hochgeschwindigkeitsleistung des Luftfahrzeugs auf der Grundlage des berechneten Schwerpunkts und der betrieblichen Spezifikationen des Luftfahrzeugs, und eine Berechnung eines Missionsparameters auf der Grundlage der Missionsflugbahn unter Verwendung der Anwendung (68) zur Berechnung der Hochgeschwindigkeitsleistung beinhaltet.

11. Verfahren nach einem der Ansprüche 8 bis 10, umfassend das Berechnen einer ersten gegebenen Flugbahn (92) durch das Berechnungsmodul (64) und das Bestimmen des Wertes von mindestens einem Missionsparameter des Luftfahrzeugs auf der Grundlage der gegebenen Flugbahn (92), und dann Berechnen mindestens einer weiteren gegebenen Flugbahn (94) des Luftfahrzeugs und eines weiteren Wertes des Missionsparameters des Luftfahrzeugs durch das Berechnungsmodul (64), bis ein Konvergenzkriterium bezüglich des Wertes des Missionsparameters des Luftfahrzeugs erreicht ist.

## Claims

1. An aircraft mission computing system (10), comprising a computing engine (40) to compute trajectories of the aircraft during a mission, comprising:
- a initializing module (58) of specifications of a mission including at least a geographical point of origin (18), a geographical destination point (20), and operational mission specifications ;
- a weather context recovery module (60) to recover a weather context in the airspace between the geographical point of origin (18) and the geographical destination point (20) ;
- a trajectories computing module (64) able to compute a mission trajectory between the geographical point of origin (18) and the geographical destination point (20) as a function of airplane performances and as a function of operational mission specifications,
caracterised in that the system (10) comprises an airplane performances determining module (62) able to determine the airplane performances based on the operational mission specifications and based on the weather context,
and in that the trajectories computing module (64) is configured to compute a plurality of iso-movement curves on several flight levels, in particular a plurality of isochronous curves (80) and/or a plurality of fuel iso-consumption curves from at least one point (82) of the trajectory and is able to determine each point (82) of the trajectory on a iso-movement curve relative to another point (84) of the trajectory,
in which the computing module (64) is configured to determine the iso-movement curves corresponding to a plurality of flight levels from an initial point to a first flight level change curve (96) and to define at least a first trajectory segment for each flight level, then the iso-movement curves from the first flight level change curve (96) for a plurality of flight levels to another flight level change curve (96) and to define at least a second trajectory segment for each flight level, then to define at least one trajectory (92) by combining successive trajectories segments chosen from among the trajectories segments defined for each plurality of flight levels.

2. The system (10) according to claim 1, wherein the computing module (64) is configured to determine one other point (84) of the trajectory on the iso-movement curve as a function of operational specifications and/or airplane performances.

3. The system (10) according to any one of the preceding claims, wherein the airplane performances determining module (62) includes an aircraft weight and balance computing application (66) able to compute a center of gravity of the aircraft and a high-speed performances computing application (68) to compute high-speed performances as a function of the computed center of gravity, and as a function of operational specifications of the aircraft, the computing module (64) being configured to compute at least one mission parameter based on the mission trajectory by using at least the high-speed performances computing application (68).

4. The system (10) according to any one of the preceding claims , wherein the trajectory computing module (64) is configured to compute a first given trajectory (92), and to determine, based on the given first trajectory (92), at least one mission parameter of the aircraft, then to compute at least one other given trajectory (94) of the aircraft, until the mission parameter converges toward a desired mission parameter value.

5. The system (10) according to claim 3 or 4, wherein the mission parameter is a weight at takeoff or a weight at landing of the aircraft adapted for the aircraft to carry out the mission trajectory or a total distance traveled by the aircraft over the mission trajectory.

6. The system (10) according to any one of the claim 3 to 5, wherein the mission parameter is a weight at takeoff or a weight at landing of the aircraft on a given terrain, the performances determining module (62) including a low-speed performances determining application (70) able to determine the maximum weight of the aircraft allowing the aircraft to take off and/or land on the given terrain,
the computing module (64) being configured to verify that the weight at takeoff or the weight at landing of the aircraft obtained using the high-speed performances computing application (68) is less than or equal to the maximum weight allowing the aircraft to take off or land on the given terrain obtained using the low-speed performances determining application (70).

7. The system (10) according to any one of the preceding claims , wherein the or each operational specification includes an airplane context, in particular a type of defective equipment, a dispatch and/or a failure, and/or includes a mission context, in particular an imposed airway (26), a prohibited zone (24) or a desired passage zone (32), the performances determining module (62) being able to determine the airplane performances as a function of the airplane context and/or of the mission context.

8. An aircraft mission trajectory computing method, comprising providing a computing system (10) according to any one of the preceding claims, the computing system (10) performing the following steps :
- acquiring specifications of a mission including at least a geographical point of origin (18), a geographical destination point (20), and operational mission specifications, with the initializing module (58);
- recovering a weather context in the airspace between the geographical point of origin (18) and the geographical destination point (20) via the recovery module (60);
- determining airplane performances, as a function of operational mission specifications and of the weather context via the determining module (62);
- computing at least one airplane trajectory between the geographical point of origin (18) and the geographical destination point (20) as a function of airplane performances and operational mission specifications,
the airplane trajectory computation comprising computing a plurality of iso-movement curves on several flight levels, in particular a plurality of isochronous curves (80) and/or a plurality of fuel iso-consumption curves from at least one point (82) of the trajectory, each point (82) of the trajectory being located on a iso-movement curve relative to another point (84) of the trajectory,
in which the trajectory computation comprises the determination of the iso-movement curves corresponding to a plurality of flight levels from an initial point to a first flight level change curve (96) to define at least a first trajectory segment for each flight level, then the determination of iso-movement curves from the first flight level change curve (96) for a plurality of flight levels to another flight level change curve (96) to define at least a second trajectory segment for each flight level, then the definition of at least one trajectory (92) by associating successive trajectory segments chosen from among the trajectory segments defined for each plurality of flight levels.

9. The method according to claim 8, comprising the choice by the computing module of each point (84) of the trajectory on the iso-movement curve as a function of operational specifications and/or airplane performances.

10. The method according to claim 8 or 9, wherein the computation by the computing module (64) comprises an aircraft weight and balance computation to compute a center of gravity of the aircraft, a high-speed performances computation of the aircraft as a function of the computed center of gravity, and of operational specifications of the aircraft, and a computation of a mission parameter based on the mission trajectory by using the high-speed performances computing application (68).

11. The method according to any one of claims 8 to 10, comprising the computation, by the computing module (64), of a first given trajectory (92), and the determination, based on the given trajectory (92), of the value of at least one mission parameter of the aircraft, then the computation, by the computing module (64), of at least one other given trajectory (94) of the aircraft and one other value of the mission parameter of the aircraft, until a convergence criterion on the value of the mission parameter of the aircraft is reached.
